# EUROPEAN PATENT APPLICATION

(11) **EP 4 706 934 A1**
(43) Date of publication of application: **11.03.2026**
(21) Application number: 24818993.8
(22) Date of filing: 15.03.2024
(51) Int. Cl.: B29C 48/92, B29C 48/08, B29C 48/25, B29C 48/88, B29C 48/305, B29L 7/00

(54) **AIR NOZZLE DEVICE AND RESIN SHEET MANUFACTURING DEVICE**

(30) Priority: 06.06.2023 JP 2023092954
(71) Applicant: The Japan Steel Works, Ltd., Tokyo 141-0032 (JP)
(72) Inventor: ISHIGURO, Ryo, Tokyo 141-0032 (JP); KIMURA, Koichi, Tokyo 141-0032 (JP)
(74) Representative: Simmons & Simmons LLP (Munich)
(86) International application number: PCT/JP2024/010353
(87) International publication number: WO 2024/252754

(57) **Abstract**

An air nozzle device according to one embodiment has: an air nozzle body 41 that jets compressed air toward a resin sheet; a support mechanism 42 that movably and rotatably supports the air nozzle body 41; a first drive mechanism that moves the air nozzle body 41; a second drive mechanism that rotates the air nozzle body 41; and a control unit that controls the first drive mechanism and the second drive mechanism. The control unit can adjust the position of the air nozzle body 41 in at least two different directions, and can also adjust the angle of the air nozzle body 41.

## Description

### TECHNICAL FIELD

The present invention relates to an air nozzle device and a resin sheet manufacturing apparatus.

### BACKGROUND ART

A T-die method has been known as one of the methods for manufacturing a resin sheet or a resin film. In the T-die method, a molten resin formed into a sheet shape by a T-die is cooled and solidified by bringing it into contact with a surface of a cast roll.

Patent Document 1 discloses a resin film manufacturing apparatus including a T-die configured to form a molten resin into a sheet shape and an air nozzle configured to press a resin sheet extruded from the T-die against a cast roll.

### RELATED ART DOCUMENTS

### PATENT DOCUMENTS

Patent Document 1: Japanese Unexamined Patent Application Publication No. 2012-6271

### SUMMARY OF THE INVENTION

### PROBLEMS TO BE SOLVED BY THE INVENTION

In order to uniformize and stabilize the quality of a resin sheet or a resin film, it is desirable to accurately adjust the position and angle of an air nozzle.

Other objects and novel features will be apparent from the description of this specification and the accompanying drawings.

### MEANS FOR SOLVING THE PROBLEMS

An air nozzle device according to one embodiment includes an air nozzle body configured to eject compressed air to a resin sheet, a first drive mechanism configured to move the air nozzle body, a second drive mechanism configured to rotate the air nozzle body, and a control unit configured to control the first drive mechanism and the second drive mechanism. The control unit can adjust a position of the air nozzle body in at least two different directions and can adjust an angle of the air nozzle body.

### EFFECTS OF THE INVENTION

According to one embodiment, a resin sheet manufacturing apparatus provided with an air nozzle whose position and angle are accurately adjusted is realized.

### BRIEF DESCRIPTIONS OF THE DRAWINGS

[FIG. 1] is a side view schematically illustrating a resin sheet manufacturing apparatus.
[FIG. 2A] is a side view schematically illustrating an air nozzle device.
[FIG. 2B] is a rear view schematically illustrating the air nozzle device.
[FIG. 3] is a block diagram illustrating a configuration of the air nozzle device.
[FIG. 4] is an explanatory diagram illustrating a change in the position and angle of an air nozzle body.
[FIG. 5A] is an explanatory diagram for a resonance phenomenon.
[FIG. 5B] is an explanatory diagram for a neck-in phenomenon.
[FIG. 5C] is an explanatory diagram for an unevenness phenomenon.
[FIG. 6] is a flowchart illustrating an example of a procedure of a resonance suppression control.
[FIG. 7] is a flowchart illustrating the example of the procedure of the resonance suppression control.
[FIG. 8] is a flowchart illustrating the example of the procedure of the resonance suppression control.
[FIG. 9] is a flowchart illustrating an example of a procedure of a neck-in suppression control.
[FIG. 10] is a flowchart illustrating the example of the procedure of the neck-in suppression control.
[FIG. 11] is a flowchart illustrating the example of the procedure of the neck-in suppression control.
[FIG. 12] is a flowchart illustrating an example of a procedure of an unevenness suppression control.
[FIG. 13] is a flowchart illustrating the example of the procedure of the unevenness suppression control.
[FIG. 14] is a flowchart illustrating the example of the procedure of the unevenness suppression control.

### DETAILED DESCRIPTION OF PREFERRED EMBODIMENTS

Hereinafter, an embodiment will be described in detail with reference to the drawings. Note that the elements and configurations having the same or substantially the same function are denoted by the same reference numerals in all the drawings used for describing the embodiment. Also, once the elements and configurations are described, the repetitive descriptions thereof will be omitted.

### <Overall Structure>

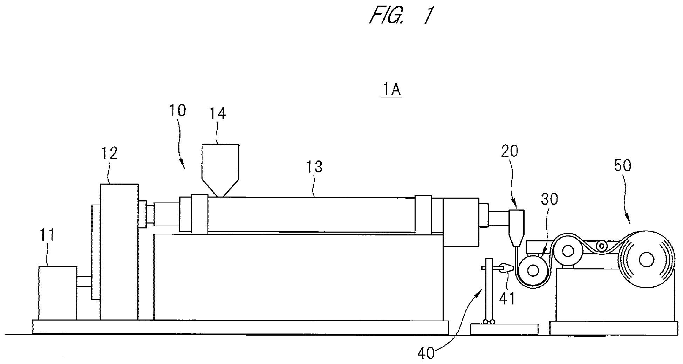

FIG. 1 is a side view schematically illustrating a resin sheet manufacturing apparatus 1A according to one embodiment. The resin sheet manufacturing apparatus 1A includes an extruder 10, a die 20, a cast roll 30, an air nozzle device 40, and a winder 50.

The extruder 10 heats and melts a resin raw material. Further, the extruder 10 presses the molten resin raw material into the die 20. The die 20 forms the molten resin pressed in by the extruder 10 into a sheet shape. The air nozzle device 40 blows compressed air to the molten resin formed into the sheet shape by the die 20 to press it against the cast roll 30. The cast roll 30 cools and solidifies the sheet-like resin pressed by the air nozzle device 40. The winder 50 winds up the sheet-like resin cooled and solidified by the cast roll 30.

### <Extruder>

The extruder 10 is made up of a main motor 11, a decelerator 12, a cylinder 13, a hopper 14, and the like. A heater is provided around the cylinder 13, and a screw is provided inside the cylinder 13. The heater is, for example, a band heater wrapped around an outer peripheral surface of the cylinder 13. The screw rotates by a driving force output from the main motor 11 and input via the decelerator 12.

The hopper 14 communicates with the cylinder 13. A resin raw material (for example, resin powder or resin pellets) is supplied into the cylinder 13 via the hopper 14.

The resin raw material supplied into the cylinder 13 is heated and melted by the heat generated from the heater and the sheer heat generated by the rotation of the screw. The molten resin raw material (molten resin) is pressed into the die 20 from a tip of the cylinder 13 by the rotating screw.

### <Die>

The die 20 is a mold that forms the molten resin pressed in by the extruder 10 into a sheet shape. In the following description, the die 20 may be referred to as a "T-die 20."

The molten resin pressed into the T-die 20 by the extruder 10 passes through a narrow flow channel in the T-die 20 and is extruded from an outlet of the T-die 20. As a result, the molten resin is formed into a sheet shape having a cross-sectional shape identical to or substantially identical to the shape of the outlet of the T-die 20.

In the following description, the molten resin formed into a sheet shape by the T-die 20 may be referred to as a "resin sheet."

### <Cast Roll>

The cast roll 30 is a rotating roll having a diameter of D mm and receives the resin sheet extruded from the outlet of the T-die 20. From another perspective, the resin sheet extruded from the T-die 20 moves to the cast roll 30 to come into contact with the surface of the cast roll 30.

A channel for circulating a refrigerant is provided inside the cast roll 30, and the surface of the cast roll 30 is cooled by the refrigerant flowing in the channel. As a result, the resin sheet coming into contact with the surface of the cast roll 30 is cooled and solidified.

Note that, in some embodiments, the surface of the cast roll 30 is subjected to various types of treatment or processing, such as a plating treatment, a thermal spray coating treatment, and a roughening treatment.

In the following description, the resin sheet after being cooled and solidified by the cast roll 30 may be referred to as a "cast sheet" for distinction from a resin sheet. Understandably, such distinction is merely for convenience of description.

### <Air Nozzle Device>

The air nozzle device 40 blows air to the resin sheet extruded from the T-die 20 to press it against the surface of the cast roll 30. In other words, the resin sheet extruded from the T-die 20 is brought into close contact with the surface of the cast roll 30 by the force of the air (wind pressure/air pressure) blown from the air nozzle device 40.

The air nozzle device 40 includes an air nozzle body 41 disposed near the T-die 20 and the cast roll 30. The air nozzle body 41 is provided with a nozzle that ejects compressed air, and the compressed air ejected from the nozzle is blown to the resin sheet extruded from the T-die 20.

The air nozzle device 40 can move the air nozzle body 41 in a plurality of different directions and can rotate the air nozzle body 41. As a result, in the resin sheet manufacturing apparatus 1A according to the present embodiment, it is possible to adjust the blowing position and blowing angle of the compressed air to the resin sheet and the strength and amount of the compressed air blown to the resin sheet. Details of the air nozzle device 40 will be described later again.

### <Winder>

The winder 50 winds the cast sheet having passed through the cast roll 30 into a roll shape. From another perspective, the cast sheet is released from the cast roll 30 and then moves to the winder 50 disposed on the downstream side of the cast roll 30. When a predetermined amount of the cast sheet is wound by the winder 50, the cast sheet is cut by a cutting machine.

### <Details of Air Nozzle Device>

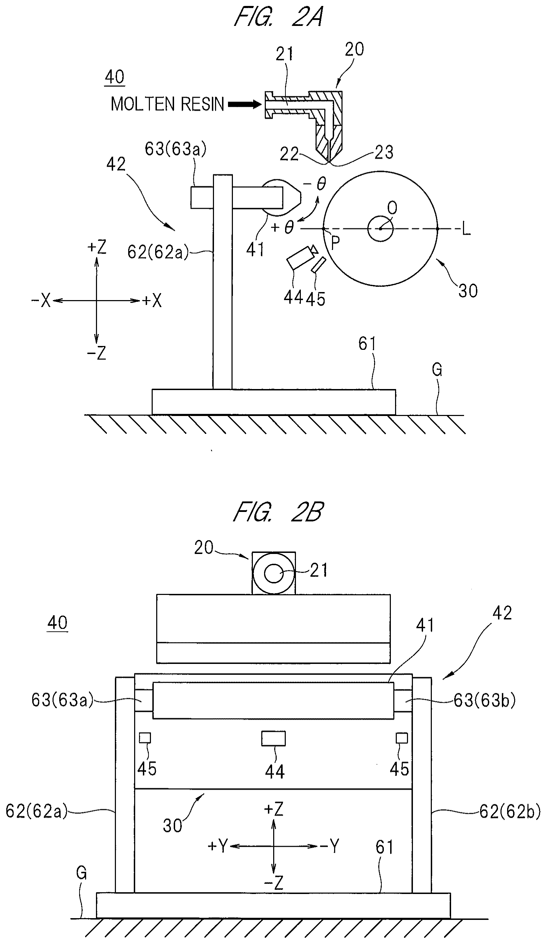

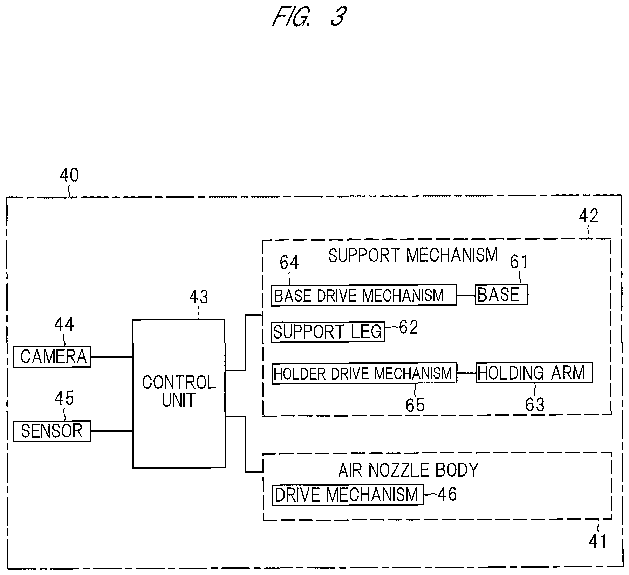

FIG. 2A is a side view schematically illustrating the air nozzle device 40, and FIG. 2B is a rear view schematically illustrating the air nozzle device 40. FIG. 3 is a block diagram illustrating the configuration of the air nozzle device 40.

As already described, the air nozzle device 40 includes the air nozzle body 41 disposed near the T-die 20 and the cast roll 30. More specifically, the air nozzle body 41 is disposed so as to face an air gap between the T-die 20 and the cast roll 30 and blows compressed air to the resin sheet that passes through the air gap. Note that the air gap corresponds to the distance (space) ranging from the outlet of the T-die 20 to the contact point between the cast roll 30 and the resin sheet.

Here, a resin channel 21 (FIG. 2A) is provided inside the T-die 20. In addition, an outlet 23 (FIG. 2A) is provided at a bottom surface 22 of the T-die 20. The molten resin pressed into the T-die 20 by the extruder 10 passes through the resin channel 21 and then is extruded to the outside of the T-die 20 from the outlet 23. Note that FIG. 2A schematically illustrates the internal structure of the T-die 20 and does not necessarily coincide with the actual internal structure.

The air nozzle device 40 includes a support mechanism 42 that supports the air nozzle body 41 so as to be movable and rotatable, in addition to the air nozzle body 41. Also, the air nozzle device 40 includes a drive mechanism that moves and rotates the air nozzle body 41 and a control unit 43 that controls the drive mechanism. The air nozzle device 40 further includes a camera 44 and a sensor 45.

The air nozzle body 41 is supported so as to be movable in at least two different directions and is supported so as to be rotatable (turnable) by the support mechanism 42.

The control unit 43 adjusts the position and angle of the air nozzle body 41 by controlling a plurality of drive mechanisms. More specifically, the control unit 43 adjusts at least either the position or angle of the air nozzle body 41 by controlling the drive mechanisms based on information obtained from a captured image of the camera 44 and a detection result of the sensor 45.

### <Cartesian Coordinate System and Reference Point>

As already described, the air nozzle body 41 is movable in at least two different directions and is rotatable. Thus, for description of the movement direction, movement amount (movement distance), rotational direction, and rotational amount (rotational angle) of the air nozzle body 41, a Cartesian coordinate system including X, Y, and Z axes illustrated in FIG. 2A and FIG. 2B is set. For the same purpose, a reference point P illustrated in FIG. 2A is set on the cast roll 30.

The X axis constituting the Cartesian coordinate system is an axis that is parallel to an installation surface G and is orthogonal to the axial direction of the cast roll 30. The Y axis is an axis that is parallel to the installation surface G and is also parallel to the axial direction of the cast roll 30. The Z axis is an axis that is orthogonal to the installation surface G and is also orthogonal to the axial direction of the cast roll 30. Note that the installation surface G is an example of a horizontal plane.

The reference point P is an intersection of an imaginary horizontal line L passing through the center O of the cast roll 30 and the surface of the cast roll 30. Note that, although two intersections exist between the imaginary horizontal line L and the surface of the cast roll, the reference point P is one intersection located on the upstream side in the conveyance direction of the resin sheet (upstream intersection).

### <Support Mechanism>

The support mechanism 42 supports the air nozzle body 41 so as to be movable in the X-axis, Y-axis, and Z-axis directions. Also, the support mechanism 42 supports the air nozzle body 41 so as to be rotatable in a rotational direction (θ direction) around a rotational axis extending in the Y-axis direction.

The support mechanism 42 includes a base 61, a support 62 fixed to the base 61, and a holder 63 that is supported by the support 62 and holds the air nozzle body 41. From another perspective, the base 61 is a movable stage on which the support 62, the holder 63, and the air nozzle body 41 are mounted.

The support mechanism 42 further includes a base drive mechanism 64 that moves the base 61. The base 61 is movable in the X-axis direction and the Y-axis direction on the installation surface G and is moved in these directions by the base drive mechanism 64. The base drive mechanism 64 is made up of a drive source, a power transmission member, a guide member, and the like, and moves the base 61 according to the control of the control unit 43.

Two supports 62 are provided on the base 61. The supports 62 are pillar-shaped members extending in the Z-axis direction and face each other in the Y-axis direction. In the following description, one of the supports 62 may be referred to as a "support leg 62a" and the other support 62 may be referred to as a "support leg 62b" for distinction. In a case where the two support legs 62a and 62b are not particularly distinguished, the support legs may be collectively referred to as "support legs 62."

Two holders 63 are movably supported by the support legs 62. More specifically, one of the holders 63 is supported so as to be movable (upward and downward) by the support leg 62a. Also, the other holder 63 is supported so as to be movable (upward and downward) by the support leg 62b.

In the following description, the holder 63 supported by the support leg 62a may be referred to as a "holding arm 63a" and the holder 63 supported by the support leg 62b may be referred to as a "holding arm 63b" for distinction. In a case where the two holding arms 63a and 63b are not particularly distinguished, the holding arms may be collectively referred to as "holding arms 63."

The holding arms 63 extend in a direction (X-axis direction) orthogonal to the longitudinal direction of the support legs 62 (Z-axis direction). One end (base end) of the holding arm 63a is coupled to the support leg 62a and the other end (leading end) of the holding arm 63a is coupled to the air nozzle body 41. Similarly, one end (base end) of the holding arm 63b is coupled to the support leg 62b and the other end (leading end) of the holding arm 63b is coupled to the air nozzle body 41.

The support mechanism 42 further includes a holder drive mechanism 65 that moves the holding arms 63. The holding arms 63 are movable in the X-axis direction and the Z-axis direction with respect to the corresponding support legs 62 and are moved in these directions by the holder drive mechanism 65.

The holder drive mechanism 65 is made up of a drive source, a power transmission member, a guide member, and the like, and moves the holding arms 63 according to the control of the control unit 43. More specifically, the holder drive mechanism 65 includes drive elements for forward and backward movements, such as a servomotor, a decelerator, a ball screw, and a linear guide, and drive elements for upward and downward movements, such as a servomotor, a decelerator, and a screw jack.

Note that the air nozzle body 41 also includes a drive mechanism 46 made up of a drive source and a power transmission member, and rotates (turns) in the θ direction by the drive mechanism 46. The drive mechanism 46 is made up of, for example, a servomotor and a decelerator.

### <Camera and Sensor>

The camera 44 and the sensor 45 are disposed near the cast roll 30. More specifically, the camera 44 is disposed at the center or approximately at the center of the cast roll 30 in the axial direction. From another perspective, the camera 44 is disposed at the center or approximately at the center of the resin sheet in the width direction. The camera 44 is a highspeed camera, and captures the resin sheet and transmits an image (image signal) of the resin sheet to the control unit 43.

Two sensors 45 are disposed on both sides of the cast roll 30 in the axial direction, with one sensor on each side. From another perspective, the sensors 45 are disposed on both sides of the resin sheet in the width direction, with one sensor on each side. The sensors 45 each detect an end portion of the resin sheet in the width direction and transmit a detection result (detection signal) to the control unit 43. More specifically, one of the sensors 45 detects one end of the resin sheet in the width direction and the other sensor 45 detects the other end of the resin sheet in the width direction.

### <Control Unit>

The control unit 43 includes a memory and a processor that can communicate with each other and is connected to the air nozzle body 41, the support mechanism 42, the camera 44, and the sensors 45 so as to be communicable. The control unit 43 adjusts the position and angle of the air nozzle body 41 by controlling the drive mechanisms (drive mechanism 46, base drive mechanism 64, and holder drive mechanism 65) based on a captured image of the camera 44 and detection results of the sensors 45.

More specifically, the control unit 43 processes the image signal transmitted from the camera 44 and the detection signals transmitted from the sensors 45 in accordance with a program stored in the memory. Furthermore, the control unit 43 controls the drive mechanism based on the processing result. For example, when the drive source of the drive mechanism is a servomotor, the control unit 43 transmits control signals indicating rotational position, rotational speed, and rotational force to the driver IC of the servomotor. Note that control of each drive mechanism based on the processing result is also performed in accordance with the program stored in the memory.

### <Positional Adjustment and Angular Adjustment of Air Nozzle Body>

From the above description, it can be understood that, when the base 61 and the holding arms 63 move, the air nozzle body 41 moves, with respect to the cast roll 30 and the like, by the same distance and in the same direction as those of the base 61 and the holding arms 63. Further, it can be understood that, when the air nozzle body 41 rotates, the air nozzle body 41 rotates with respect to the cast roll 30 and the like. In other words, the air nozzle body 41 is movable in the X-axis, Y-axis, and Z-axis directions and is rotatable in the θ direction with respect to the cast roll 30 and the like.

From another perspective, the air nozzle body 41 is movable forward and backward (in the X-axis direction), leftward and rightward (in the Y-axis direction), and upward and downward (in the Z-axis direction), and is rotatable upward and downward (in the θ direction).

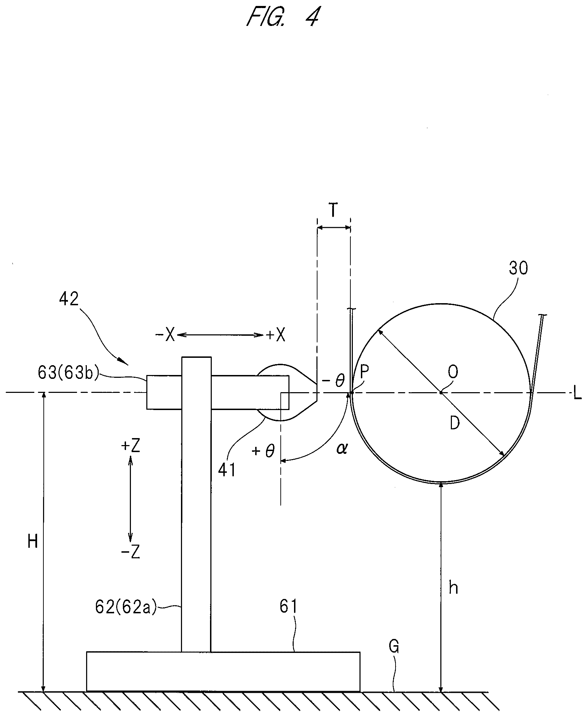

FIG. 4 is an explanatory diagram illustrating a change in the position and angle of the air nozzle body 41. For example, when the air nozzle body 41 moves forward or backward (in the X-axis direction), the position of the air nozzle body 41 with respect to the cast roll 30 changes. From another perspective, the distance T between the leading end of the air nozzle body 41 and the resin sheet on the cast roll 30 increases or decreases.

When the air nozzle body 41 moves upward or downward (in the Z-axis direction), for example, the position of the air nozzle body 41 with respect to the installation surface G changes. From another perspective, the height H of the air nozzle body 41 with respect to the installation surface G increases or decreases.

Also, when the air nozzle body 41 rotates upward or downward (in the θ direction), for example, the orientation of the air nozzle body 41 with respect to the cast roll 30 changes. From another perspective, the angle α of the air nozzle body 41 with respect to the imaginary horizontal line L increases or decreases.

Such movement and rotation of the air nozzle body 41 described above can be regarded as movement and rotation with respect to the T-die 20 or the resin sheet. For example, when the air nozzle body 41 moves forward or backward (in the X-axis direction), the position (distance) of the air nozzle body 41 with respect to the T-die 20 or the resin sheet changes.

Also, when the air nozzle body 41 moves upward or downward (in the Z-axis direction), the position (height) of the air nozzle body 41 with respect to the T-die 20 or the resin sheet changes. When the air nozzle body 41 rotates upward or downward (in the θ direction), the angle (orientation) of the air nozzle body 41 with respect to the T-die 20 or the resin sheet changes.

Then, when the position (distance or height) of the air nozzle body 41 with respect to the resin sheet changes, the strength of the compressed air blown to the resin sheet changes or the blowing position of the compressed air to the resin sheet changes. Further, when the angle (orientation) of the air nozzle body 41 with respect to the resin sheet changes, the blowing angle and blowing position of the compressed air to the resin sheet change.

When the angle (orientation) of the air nozzle body 41 with respect to the T-die 20 changes, the influence of the compressed air blown from the air nozzle body 41 on the T-die 20 changes. For example, the amount of the compressed air blown to the T-die 20 increases, leading to a reduction in the temperature of the T-die 20. In addition, the position at which the resin sheet comes into contact with the cast roll 30 changes.

Therefore, by adjusting the position and angle of the air nozzle body 41, the quality of the resin sheet manufactured by the resin sheet manufacturing apparatus 1A can be improved and stabilized. From another perspective, in order to improve and stabilize the quality of the resin sheet, it is necessary to adjust the air nozzle body 41 to a suitable position and a suitable angle with high reproducibility.

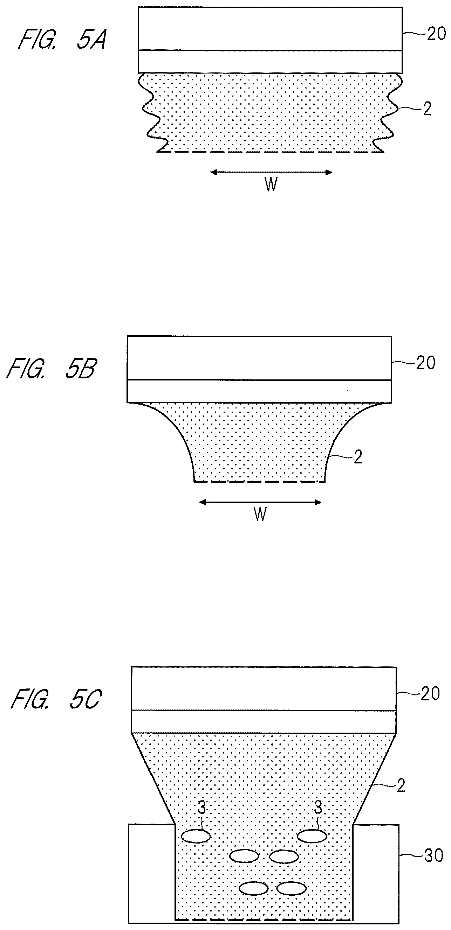

For example, by adjusting the position and angle of the air nozzle body 41, it is possible to prevent or suppress occurrence of phenomena called "resonance", "neck-in", and "unevenness." FIG. 5A is an explanatory diagram for a resonance phenomenon that occurs in a process of manufacturing a resin sheet. FIG. 5B is an explanatory diagram for a neck-in phenomenon, and FIG. 5C is an explanatory diagram for an unevenness phenomenon.

The resonance phenomenon is a phenomenon in which the width W of a resin sheet 2 extruded from the T-die 20 varies periodically. The neck-in phenomenon is a phenomenon in which the width W of the resin sheet 2 extruded from the T-die 20 narrows. The unevenness phenomenon is a phenomenon in which a plurality of protrusions 3 is generated on the surface of the resin sheet 2.

The air nozzle device 40 has a function of automatically adjusting the position and angle of the air nozzle body 41 in order to prevent or suppress occurrence of the above-described phenomena. More specifically, the control unit 43 of the air nozzle device 40 performs at least one of various types of control described below to optimize the position and angle of the air nozzle body 41.

### <Resonance Suppression Control (Angular Adjustment)>

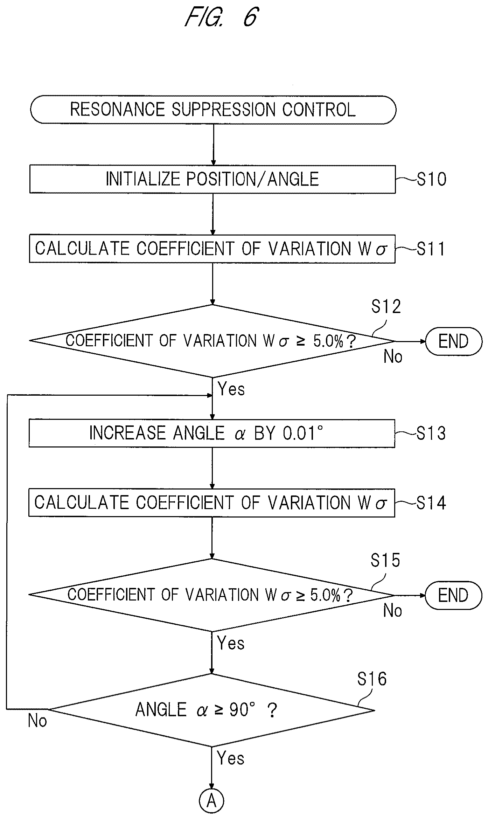

FIG. 6 to FIG. 8 are flowcharts illustrating an example of a procedure of resonance suppression control that the control unit 43 of the air nozzle device 40 performs. The flowcharts illustrated in FIG. 6 to FIG. 8 are mutually connected through points A and B.

When the resonance suppression control starts, the position and angle of the air nozzle body 41 are initialized in step S10 illustrated in FIG. 6. Specifically, the position and angle of the air nozzle body 41 are adjusted such that the angle α, the distance T, and the height H illustrated in FIG. 4 coincide with the following initial conditions (initial values). Note that the following "roll height h" represents a vertical distance [mm] from the installation surface G to the lower end of the cast roll 30. Also, "(1/2)D" represents the radius [mm] of the cast roll 30.
(Initial Conditions)
· Angle α = 0 [°]
· Distance T = 10 [mm]
· Height H = h+(1/2)D [mm]

When step S10 ends, the flow proceeds to step S11. In step S11, the coefficient of variation Wσ (%) of the width W of the resin sheet 2 is calculated. The coefficient of variation Wσ is an indicator for determining the presence or absence of variation or degree of variation of the width W of the resin sheet 2.

Specifically, based on the detection results of the sensors 45, the width W of the resin sheet 2 extruded from the T-die 20 is constantly measured to calculate the standard deviation and average value thereof. Then, the coefficient of variation Wσ is calculated from the standard deviation and average value of the width W of the resin sheet 2. Note that the average value here is a moving average value.

In the following step S12, it is determined whether the calculated coefficient of variation Wσ exceeds a specified value. The specified value in the present embodiment is 5.0%. That is, in step S12, it is determined whether the coefficient of variation Wσ is 5.0% or more. Note that the specified value regarding the coefficient of variation Wσ can be freely changed.

When it is determined in step S12 that the coefficient of variation Wσ is less than 5.0%, the processing ends. From another perspective, in a case where it is determined in step S12 that the coefficient of variation Wσ is less than 5.0%, it is not necessary to adjust the position and angle of the air nozzle body 41 in order to prevent or suppress occurrence of the resonance phenomenon. On the other hand, when it is determined in step S12 that the coefficient of variation Wσ is 5.0% or more, the flow proceeds to step S13.

In step S13, the angle α is changed. In the present embodiment, the drive mechanism 46 rotates the air nozzle body 41 by 0.01° in the +θ direction. In other words, when step S13 is performed, the angle α increases by 0.01°. Understandably, the adjustment amount of the angle α per time in step S13 can be changed as appropriate.

When step S13 ends, steps S14 and S15 are performed. In steps S14 and S15, the coefficient of variation Wσ is calculated again and then is compared to the specified value. Specifically, it is determined whether the coefficient of variation Wσ is 5.0% or more in the same manner as that of steps S11 and S12. Then, when it is determined in step S15 that the coefficient of variation Wσ is not 5.0% or more, the processing ends. In other words, when it is determined in step S15 that the coefficient of variation Wσ is less than 5.0%, the processing ends. On the other hand, when it is determined in step S15 that the coefficient of variation Wσ is 5.0% or more, the flow proceeds to step S16.

In step S16, it is determined whether the angle α does not exceed a threshold. The threshold in the present embodiment is 90°. Thus, in step S16, it is determined whether the angle α is 90° or more. When it is determined in step S16 that the angle α is not 90° or more, the flow returns to step S13.

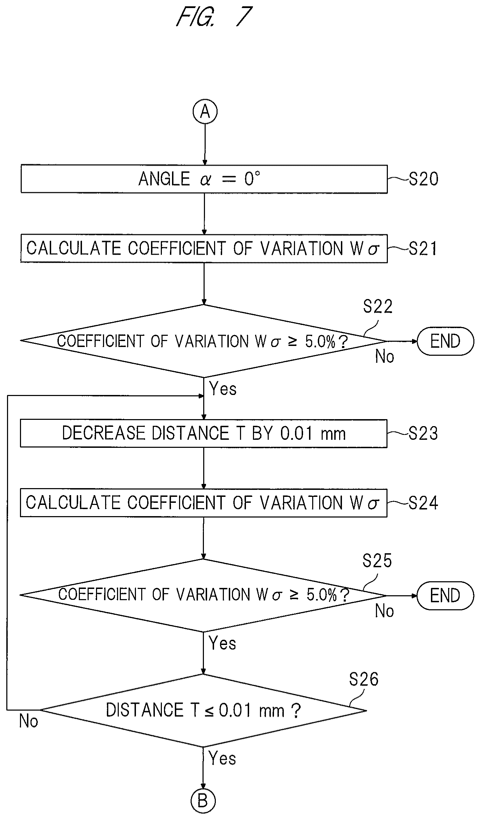

After that, steps S13 to S16 are repeated. During the repetition, when it is determined in step S15 that the coefficient of variation Wσ is less than 5.0%, the processing ends. On the other hand, when it is determined in step S16 that the angle α is 90° or more, the flow proceeds to step S20 illustrated in FIG. 7. From another perspective, in a case where it is determined in step S16 that the angle α is 90° or more, it is determined that it is not possible to suppress the coefficient of variation Wσ to less than 5.0% by the adjustment of the angle α.

### <Resonance Suppression Control (Distance Adjustment)>

In step S20 illustrated in FIG. 7, the angle α is reset to its initial value. Understandably, in steps S10 to S16 illustrated in FIG. 6, the distance T and the height H are not changed. That is, when step S20 is performed, the position and angle of the air nozzle body 41 are reset to their states before step S11 is performed (their initial states).

When step S20 ends, steps S21 and S22 are performed. In steps S21 and S22, it is determined whether the coefficient of variation Wσ is 5.0% or more in the same manner as that of steps S11 and S12.

When it is determined in step S22 that the coefficient of variation Wσ is less than 5.0%, the processing ends. On the other hand, when it is determined in step S22 that the coefficient of variation Wσ is 5.0% or more, the flow proceeds to step S23.

In step S23, the distance T is changed. In the present embodiment, the air nozzle body 41 is moved by 0.01 mm in the positive X-axis direction (forward) by at least either the base drive mechanism 64 or the holder drive mechanism 65. That is, when step S23 is performed, the distance T decreases by 0.01 mm. Understandably, the adjustment amount of the distance T per time in step S23 can be changed as appropriate.

When step S23 ends, steps S24 and S25 are performed. In steps S24 and S25, it is determined whether the coefficient of variation Wσ is 5.0% or more in the same manner as that of steps S21 and S22. Then, when it is determined in step S25 that the coefficient of variation Wσ is less than 5.0%, the processing ends. On the other hand, when it is determined in step S25 that the coefficient of variation Wσ is 5.0% or more, the flow proceeds to step S26.

In step S26, it is determined whether the distance T does not fall below a threshold. The threshold in the present embodiment is 0.01 mm. Thus, in step S26, it is determined whether the distance T is 0.01 mm or less. When it is determined in step S26 that the distance T is not 0.01 mm or less, the flow returns to step S23.

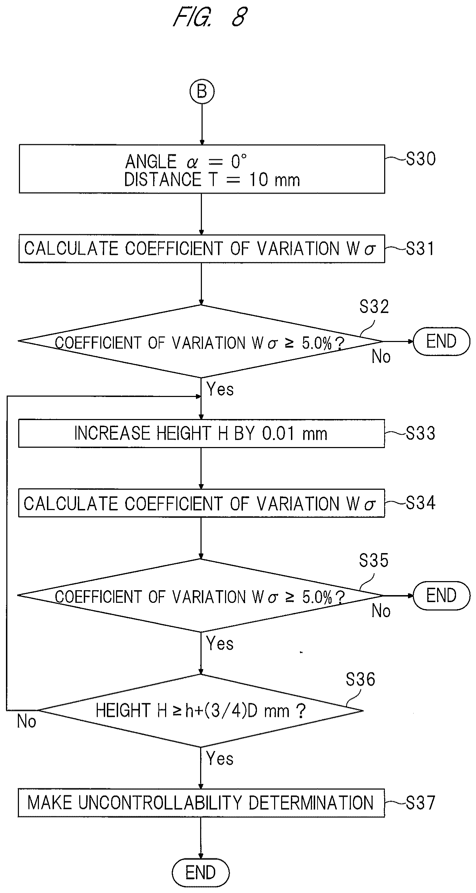

After that, steps S23 to S26 are repeated. During the repetition, when it is determined in step S25 that the coefficient of variation Wσ is less than 5.0%, the processing ends. On the other hand, when it is determined in step S26 that the distance T is 0.01 mm or less, the flow proceeds to step S30 illustrated in FIG. 8. From another perspective, in a case where it is determined in step S26 that the distance T is 0.01 mm or less, it is determined that it is not possible to suppress the coefficient of variation Wσ to less than 5.0% by the adjustment of the angle α and the distance T.

### <Resonance Suppression Control (Height Adjustment)>

In step S30 illustrated in FIG. 8, the angle α and the distance T are reset to their initial values. Understandably, in steps S20 to S26 illustrated in FIG. 7, the height H is not changed. That is, when step S30 is performed, the position and angle of the air nozzle body 41 are reset to their states before step S11 is performed (their initial states).

When step S30 ends, steps S31 and S32 are performed. In steps S31 and S32, it is determined whether the coefficient of variation Wσ is 5.0% or more in the same manner as that of steps S11 and 12.

When it is determined in step S32 that the coefficient of variation Wσ is less than 5.0%, the processing ends. On the other hand, when it is determined in step S32 that the coefficient of variation Wσ is 5.0% or more, the flow proceeds to step S33.

In step S33, the height H is changed. In the present embodiment, the air nozzle body 41 is moved by 0.01 mm in the positive Z-axis direction (upward) by the holder drive mechanism 65. That is, when step S33 is performed, the height H increases by 0.01 mm. Understandably, the adjustment amount of the height H per time in step S33 can be changed as appropriate.

When step S33 ends, steps S34 and S35 are performed. In steps S34 and S35, it is determined whether the coefficient of variation Wσ is 5.0% or more in the same manner as that of steps S31 and S32. Then, when it is determined in step S35 that the coefficient of variation Wσ is less than 5.0%, the processing ends. On the other hand, when it is determined in step S35 that the coefficient of variation Wσ is 5.0% or more, the flow proceeds to step S36.

In step S36, it is determined whether the height H does not exceed a threshold. The threshold in the present embodiment is h+(3/4)D. That is, in step S36, it is determined whether the height H is h+(3/4)D or more. When it is determined in step S36 that the height H is not h+(3/4)D or more, the flow returns to step S33.

After that, steps S33 to S36 are repeated. During the repetition, when it is determined in step S35 that the coefficient of variation Wσ is less than 5.0%, the processing ends. On the other hand, when it is determined in step S36 that the height H is h+(3/4)D or more, the flow proceeds to step S37.

In step S37, an uncontrollability determination is made, and then the processing ends. In other words, the adjustment range of the height H is one half of the radius of the cast roll 30. From another perspective, in a case where it is determined in step S36 that the height H is h+(3/4)D or more, it is determined that it is not possible to suppress the coefficient of variation Wσ to less than 5.0% by the adjustment of any of the angle α, the distance T, and the height H. In this case, the resonance suppression control may be performed again after the initial conditions (initial values) are changed, or the resonance suppression control may be terminated.

During the resonance suppression control, the temperature of the T-die 20 is monitored by a temperature sensor such as a thermocouple. Then, when the temperature change of the T-die 20 exceeds a specified range (e.g., ±1.0°C), the processing is interrupted.

Note that there is also a processing procedure in which the position and angle of the air nozzle body 41 are not reset to their initial states in step S20 (FIG. 7) and in step S30 (FIG. 8). For example, the angle α when the coefficient of variation Wσ is minimum during repetition of steps S13 to S16 may be stored, and then the stored angle α may be selected in step S20. In addition, the distance T when the coefficient of variation Wσ is minimum during repetition of steps S23 to S26 may be stored, and then the stored distance T may be selected in step S30.

### <Neck-In Suppression Control (Angular Adjustment)>

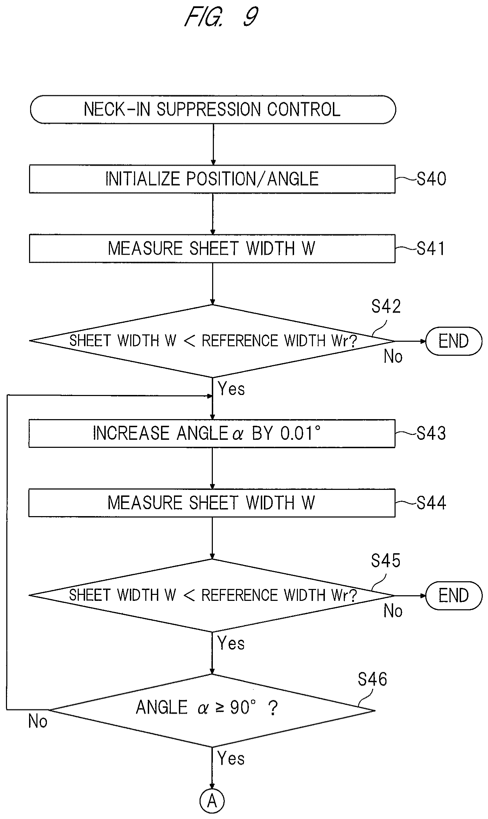

FIG. 9 to FIG. 11 are flowcharts illustrating an example of a procedure of neck-in suppression control that the control unit 43 of the air nozzle device 40 performs. The flowcharts illustrated in FIG. 9 to FIG. 11 are mutually connected through points A and B.

When the neck-in suppression control starts, the position and angle of the air nozzle body 41 are initialized in step S40 illustrated in FIG. 9. Specifically, the angle α, the distance T, and the height H illustrated in FIG. 4 are adjusted such that the air nozzle body 41 has the same position and angle as those adjusted in step S10 (FIG. 6).

When step S40 ends, the flow proceeds to step S41. In step S41, the width W of the resin sheet 2 is measured. Specifically, based on detection results of the sensors 45, the width W of the resin sheet 2 extruded from the T-die 20 is measured for a certain period of time. In the present embodiment, the width W of the resin sheet 2 is measured for 60 seconds.

In the following step S42, it is determined whether the measured width W of the resin sheet 2 falls below a reference width Wr. Then, when it is determined in step S42 that the width W is the reference width Wr or more, the processing ends. From another perspective, in a case where it is determined in step S42 that the width W is the reference width Wr or more, it is not necessary to adjust the position and angle of the air nozzle body 41 in order to prevent or suppress occurrence of the neck-in phenomenon. On the other hand, when it is determined in step S42 that the width W is less than the reference width Wr, the flow proceeds to step S43.

In step S43, the angle α is changed. In the present embodiment, the air nozzle body 41 is rotated by 0.01° in the +θ direction by the drive mechanism 46. That is, when step S43 is performed, the angle α increases by 0.01°. Understandably, the adjustment amount of the angle α per time in step S43 can be changed as appropriate.

When step S43 ends, steps S44 and S45 are performed. In steps S44 and S45, the width W is measured again and then is compared to the reference width Wr. Specifically, it is determined whether the width W of the resin sheet 2 falls below the reference width Wr in the same manner as that of steps S41 and S42. Then, when it is determined that the width W is the reference width Wr or more, the processing ends. On the other hand, when it is determined that the width W is less than the reference width Wr, the flow proceeds to step S46.

In step S46, it is determined whether the angle α does not exceed a threshold. The threshold in the present embodiment is 90°. That is, in step S46, it is determined whether the angle α is 90° or more. When it is determined in step S46 that the angle α is not 90° or more, the flow returns to step S43.

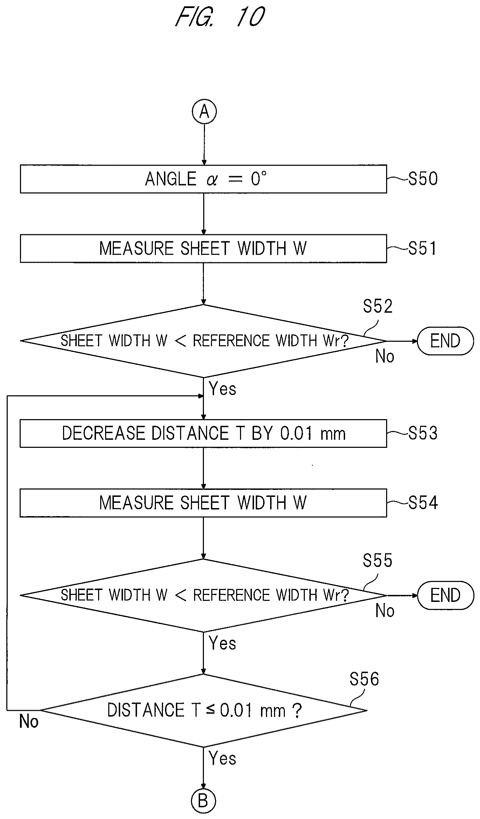

After that, steps S43 to S46 are repeated. During the repetition, when it is determined in step S45 that the width W is the reference width Wr or more, the processing ends. On the other hand, when it is determined in step S46 that the angle α is 90° or more, the flow proceeds to step S50 illustrated in FIG. 10. From another perspective, in a case where it is determined in step S46 that the angle α is 90° or more, it is determined that it is not possible to retain the width W at the reference width Wr or more by the adjustment of the angle α.

### <Neck-In Suppression Control (Distance Adjustment)>

In step S50 illustrated in FIG. 10, the angle α is reset to its initial value. Understandably, in steps S40 to S46 illustrated in FIG. 9, the distance T and the height H are not changed. That is, when step S50 is performed, the position and angle of the air nozzle body 41 are reset to their states before step S41 is performed (their initial states).

When step S50 ends, steps S51 and S52 are performed. In steps S51 and S52, it is determined whether the width W of the resin sheet 2 falls below the reference width Wr in the same manner as that of steps S41 and S42. Then, when it is determined in step S52 that the width W is the reference width Wr or more, the processing ends. On the other hand, when it is determined in step S52 that the width W is less than the reference width Wr, the flow proceeds to step S53.

In step S53, the distance T is changed. In the present embodiment, the air nozzle body 41 is moved by 0.01 mm in the positive X-axis direction (forward) by at least either the base drive mechanism 64 or the holder drive mechanism 65. That is, when step S53 is performed, the distance T decreases by 0.01 mm. Understandably, the adjustment amount of the distance T per time in step S53 can be changed as appropriate.

When step S53 ends, steps S54 and S55 are performed. In steps S54 and S55, it is determined whether the width W of the resin sheet 2 falls below the reference width Wr in the same manner as that of steps S51 and S52. Then, when it is determined in step S55 that the width W is the reference width Wr or more, the processing ends. On the other hand, when it is determined in step S55 that the width W is less than the reference width Wr, the flow proceeds to step S56.

In step S56, it is determined whether the distance T does not fall below a threshold. The threshold in the present embodiment is 0.01 mm. Thus, in step S56, it is determined whether the distance T is 0.01 mm or less. When it is determined in step S56 that the distance T is not 0.01 mm or less, the flow returns to step S53.

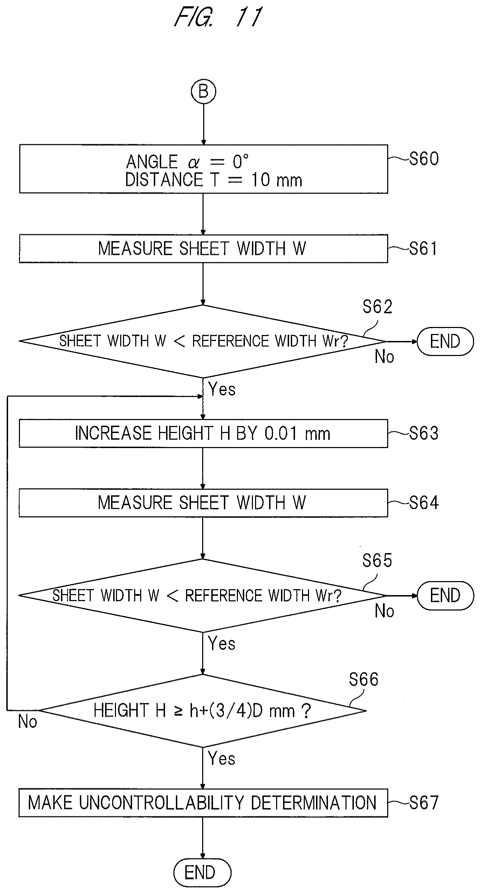

After that, steps S53 to S56 are repeated. During the repetition, when it is determined in step S55 that the width W is the reference width Wr or more, the processing ends. On the other hand, when it is determined in step S56 that the distance T is 0.01 mm or less, the flow proceeds to step S60 illustrated in FIG. 11. From another perspective, in a case where it is determined in step S56 that the distance T is 0.01 mm or less, it is determined that it is not possible to retain the width W at the reference width Wr or more by the adjustment of the angle α and the distance T.

### <Neck-In Suppression Control (Height Adjustment)>

In step S60 illustrated in FIG. 11, the angle α and the distance T are reset to their initial values. Understandably, in steps S50 to S56 illustrated in FIG. 10, the height H is not changed. That is, when step S60 is performed, the position and angle of the air nozzle body 41 are reset to their states before step S51 is performed (their initial states).

When step S60 ends, steps S61 and S62 are performed. In steps S61 and S62, it is determined whether the width W of the resin sheet 2 falls below the reference width Wr in the same manner as that of steps S41 and S42.

When it is determined in step S62 that the width W is the reference width Wr or more, the processing ends. On the other hand, when it is determined in step S62 that the width W is less than the reference width Wr, the flow proceeds to step S63.

In step S63, the height H is changed. In the present embodiment, the air nozzle body 41 is moved by 0.01 mm in the positive Z-axis direction (upward) by the holder drive mechanism 65. That is, when step S63 is performed, the height H increases by 0.01 mm. Understandably, the adjustment amount of the height H per time in step S63 can be changed as appropriate.

When step S63 ends, steps S64 and S65 are performed. In steps S64 and S65, it is determined whether the width W of the resin sheet 2 falls below the reference width Wr in the same manner as that of steps S61 and S62. Then, when it is determined in step S65 that the width W is the reference width Wr or more, the processing ends. On the other hand, when it is determined in step S65 that the width W is less than the reference width Wr, the flow proceeds to step S66.

In step S66, it is determined whether the height H does not exceed a threshold. The threshold in the present embodiment is h+(3/4)D. Thus, in step S66, it is determined whether the height H is h+(3/4)D or more. When it is determined in step S66 that the height H is not h+(3/4)D or more, the flow returns to step S63.

After that, steps S63 to S66 are repeated. During the repetition, when it is determined in step S65 that the width W is the reference width Wr or more, the processing ends. On the other hand, when it is determined in step S66 that the height H is h+(3/4)D or more, the flow proceeds to step S67.

In step S67, an uncontrollability determination is made, and then the processing ends. In other words, the adjustment range of the height H is one half of the radius of the cast roll 30. From another perspective, in a case where it is determined in step S66 that the height H is h+(3/4)D or more, it is determined that it is not possible to retain the width W at the reference width Wr or more by the adjustment of any of the angle α, the distance T, and the height H. In this case, the neck-in suppression control may be performed again after the initial conditions (initial values) are changed, or the neck-in suppression control may be terminated.

Note that, during the neck-in suppression control, the temperature of the T-die 20 is monitored by a temperature sensor such as a thermocouple. Then, when the temperature change of the T-die 20 exceeds a specified range (e.g., ±1.0°C), the processing is interrupted.

There is also a processing procedure in which the position and angle of the air nozzle body 41 are not reset to their initial states in step S50 (FIG. 10) and in step S60 (FIG. 11). For example, the angle α when the width W of the resin sheet 2 is maximum during repetition of steps S43 to S46 may be stored, and then the stored angle α may be selected in step S50. In addition, the distance T when the width W of the resin sheet 2 is maximum during repetition of steps S53 to S56 (FIG. 10) may be stored, and then the stored distance T may be selected in step S60.

### <Unevenness Suppression Control (Angular Adjustment)>

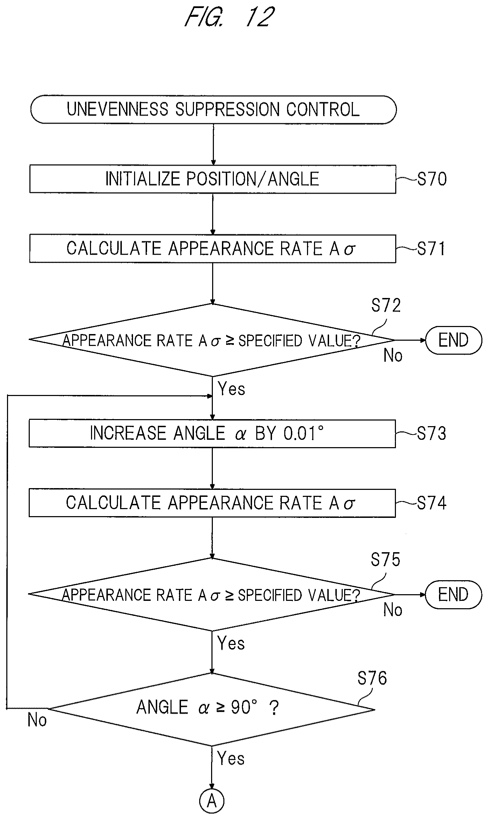

FIG. 12 to FIG. 14 are flowcharts illustrating an example of a procedure of unevenness suppression control that the control unit 43 of the air nozzle device 40 performs. The flowcharts illustrated in FIG. 12 to FIG. 14 are mutually connected through points A and B.

When the unevenness suppression control starts, the position and angle of the air nozzle body 41 are initialized in step S70 illustrated in FIG. 12. Specifically, the angle α, the distance T, and the height H illustrated in FIG. 4 are adjusted such that the air nozzle body 41 has the same position and angle as those adjusted in step S10 (FIG. 6).

When step S70 ends, the flow proceeds to step S71. In step S71, the appearance rate Aσ of protrusions 3 on the surface of the resin sheet 2 is calculated. The appearance rate Aσ is an indicator for determining the presence or absence of the unevenness phenomenon or the degree of the unevenness phenomenon.

Specifically, the camera 44 captures the surface of the resin sheet 2 for a certain period of time. Furthermore, the captured image of the camera 44 is analyzed, and the number of protrusions 3 larger than a specified size is calculated as the appearance rate Aσ.

In the following step S72, it is determined whether the calculated appearance rate Aσ exceeds a specified value. When it is determined in step S72 that the appearance rate Aσ is less than the specified value, the processing ends. From another perspective, in a case where it is determined in step S72 that the appearance rate Aσ is less than the specified value, it is not necessary to adjust the position and angle of the air nozzle body 41 in order to prevent or suppress occurrence of the unevenness phenomenon. On the other hand, when it is determined in step S72 that the appearance rate Aσ is the specified value or more, the flow proceeds to step S73.

In step S73, the angle α is changed. In the present embodiment, the air nozzle body 41 is rotated by 0.01° in the +θ direction by the drive mechanism 46. That is, when step S73 is performed, the angle α increases by 0.01°. Understandably, the adjustment amount of the angle α per time in step S73 can be changed as appropriate.

When step S73 ends, steps S74 and S75 are performed. In steps S74 and S75, the appearance rate Aσ is calculated again and then is compared to the specified value. Specifically, it is determined whether the appearance rate Aσ is the specified value or more in the same manner as that of steps S71 and S72. Then, when it is determined in step S75 that the appearance rate Aσ is not the specified value or more, the processing ends. In other words, when it is determined in step S75 that the appearance rate Aσ is less than the specified value, the processing ends. On the other hand, when it is determined in step S75 that the appearance rate Aσ is the specified value or more, the flow proceeds to step S76.

In step S76, it is determined whether the angle α does not exceed a threshold. The threshold in the present embodiment is 90°. Thus, in step S76, it is determined whether the angle α is 90° or more. When it is determined in step S76 that the angle α is not 90° or more, the flow returns to step S73.

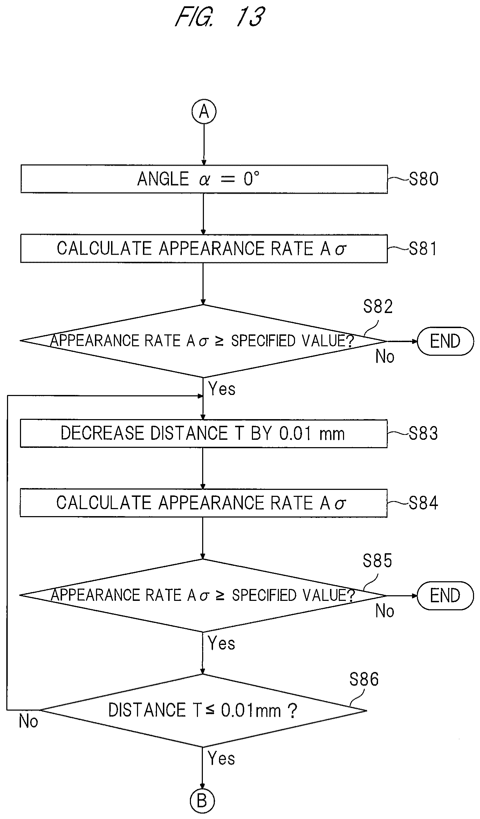

After that, steps S73 to S76 are repeated. During the repetition, when it is determined in step S75 that the appearance rate Aσ is less than the specified value, the processing ends. On the other hand, when it is determined in step S76 that the angle α is 90° or more, the flow proceeds to step S80 illustrated in FIG. 13. From another perspective, in a case where it is determined in step S76 that the angle α is 90° or more, it is determined that it is not possible to suppress by the appearance rate Aσ to less than the specified value by the adjustment of the angle α.

### <Unevenness Suppression Control (Distance Adjustment)>

In step S80 illustrated in FIG. 13, the angle α is reset to its initial value. Understandably, in steps S70 to S76 illustrated in FIG. 12, the distance T and the height H are not changed. That is, when step S80 is performed, the position and angle of the air nozzle body 41 are reset to their states before step S71 is performed (their initial states).

When step S80 ends, steps S81 and S82 are performed. In steps S81 and S82, it is determined whether the appearance rate Aσ is the specified value or more in the same manner as that of steps S71 and S72.

When it is determined in step S82 that the appearance rate Aσ is less than the specified value, the processing ends. On the other hand, when it is determined in step S82 that the appearance rate Aσ is the specified value or more, the flow proceeds to step S83.

In step S83, the distance T is changed. In the present embodiment, the air nozzle body 41 is moved by 0.01 mm in the positive X-axis direction (forward) by at least either the base drive mechanism 64 or the holder drive mechanism 65. That is, when step S83 is performed, the distance T decreases by 0.01 mm. Understandably, the adjustment amount of the distance T per time in step S83 can be changed as appropriate.

When step S83 ends, steps S84 and S85 are performed. In steps S84 and S85, it is determined whether the appearance rate Aσ is the specified value or more in the same manner as that of steps S81 and S82. Then, when it is determined in step S85 that the appearance rate Aσ is less than the specified value, the processing ends. On the other hand, when it is determined in step S85 that the appearance rate Aσ is the specified value or more, the flow proceeds to step S86.

In step S86, it is determined whether the distance T does not fall below a threshold. The threshold in the present embodiment is 0.01 mm. Thus, in step S86, it is determined whether the distance T is 0.01 mm or less. When it is determined in step S86 that the distance T is not 0.01 mm or less, the flow returns to step S83.

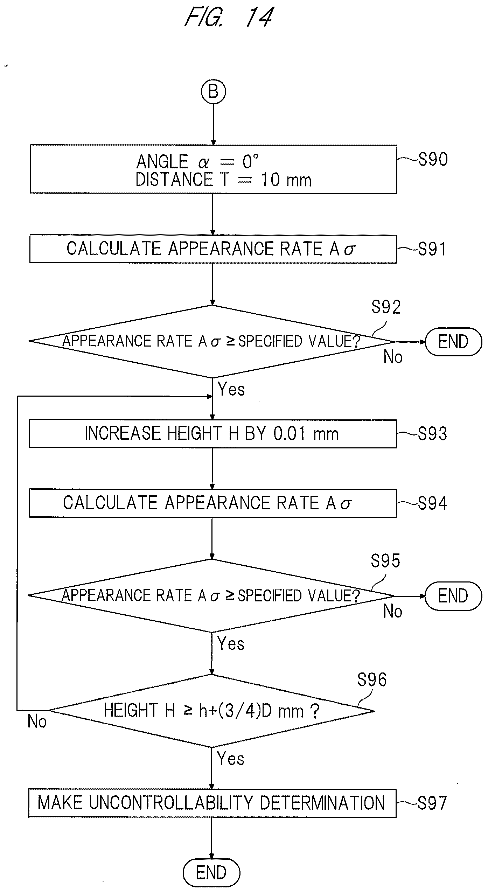

After that, steps S83 to S86 are repeated. During the repetition, when it is determined in step S85 that the appearance rate Aσ is less than the specified value, the processing ends. On the other hand, when it is determined in step S86 that the distance T is 0.01 mm or less, the flow proceeds to step S90 illustrated in FIG. 14. From another perspective, in a case where it is determined in step S86 that the distance T is 0.01 mm or less, it is determined that it is not possible to suppress the appearance rate Aσ to less than the specified value by the adjustment of the angle α and the distance T.

### <Unevenness Suppression Control (Height Adjustment)>

In step S90 illustrated in FIG. 14, the angle α and the distance T are reset to their initial values. Understandably, in steps S80 to S86 illustrated in FIG. 13, the height H is not changed. That is, when step S90 is performed, the position and angle of the air nozzle body 41 are reset to their states before step S81 is performed (their initial states).

When step S90 ends, steps S91 and S92 are performed. In steps S91 and S92, it is determined whether the appearance rate Aσ is the specified value or more in the same manner as that of steps S71 and S72.

When it is determined in step S92 that the appearance rate Aσ is less than the specified value, the processing ends. On the other hand, when it is determined in step S92 that the appearance rate Aσ is the specified value or more, the flow proceeds to step S93.

In step S93, the height H is changed. In the present embodiment, the air nozzle body 41 is moved by 0.01 mm in the positive Z-axis direction (upward) by the holder drive mechanism 65. That is, when step S93 is performed, the height H increases by 0.01 mm. Understandably, the adjustment amount of the height H per time in step S93 can be changed as appropriate.

When step S93 ends, steps S94 and S95 are performed. In steps S94 and S95, it is determined whether the appearance rate Aσ is the specified value or more in the same manner as that of steps S91 and S92. Then, when it is determined in step S95 that the appearance rate Aσ is less than the specified value, the processing ends. On the other hand, when it is determined in step S95 that the appearance rate Aσ is the specified value or more, the flow proceeds to step S96.

In step S96, it is determined whether the height H does not exceed a threshold. The threshold in the present embodiment is h+(3/4)D. Thus, in step S96, it is determined whether the height H is h+(3/4)D or more. When it is determined in step S96 that the height H is not h+(3/4)D or more, the flow returns to step S93.

After that, steps S93 to S96 are repeated. During the repetition, when it is determined in step S95 that the appearance rate Aσ is less than the specified value, the processing ends. On the other hand, when it is determined in step S96 that the height H is h+(3/4)D or more, the flow proceeds to step S97.

In step S97, an uncontrollability determination is made, and then the processing ends. In other words, the adjustment range of the height H is one half of the radius of the cast roll 30. From another perspective, in a case where it is determined in step S96 that the height H is h+(3/4)D or more, it is determined that it is not possible to suppress the appearance rate Aσ to less than the specified value by the adjustment of any of the angle α, the distance T, and the height H. In this case, the unevenness suppression control may be performed again after the initial conditions (initial values) are changed, or the unevenness suppression control may be terminated.

In the foregoing, the invention made by the inventors of this application has been specifically described based on the embodiments and examples. However, the present invention is not limited to the embodiments or examples described above and various modifications can be made within the range not departing from the gist of the present invention.

For example, it is not always necessary to constantly perform the above-described three types of suppression control. Also, the control that the control unit 43 of the air nozzle device 40 performs is not limited to the above-described three types of suppression control. For example, in another embodiment, the control unit 43 determines the presence or absence of coloration or discoloration or the degree of coloration or discoloration of the resin sheet 2 based on a captured image of the camera 44, and adjusts the position and angle of the air nozzle body 41 so as to prevent or suppress the coloration or discoloration. Note that, in a case where the control unit 43 performs two or more types of control, the order of performance can be set as appropriate.

In a case where the angle, distance, and height of the air nozzle body 41 are changed, the air nozzle body 41 may be rotated or moved in a direction different from the above-described directions. For example, in an embodiment, the air nozzle body 41 may be moved in the negative X-axis direction (backward) in step S23 (FIG. 7). In another embodiment, the air nozzle body 41 may be moved in the negative Z-axis direction (downward) in step S33 (FIG. 8).

The width W of the resin sheet 2 may be measured based on a captured image of the camera 44, instead of the detection results of the sensors 45 or together with the detection results of the sensors 45.

The thresholds regarding the rotational angle, movement distance (horizontal movement distance), and upward/downward movement distance (vertical movement distance) of the air nozzle body 41 can be changed as appropriate. For example, the threshold compared to the angle α in step S16 (FIG. 6) and the threshold compared to the distance T in step S26 can be changed as appropriate. Also, a stopper that prevents contact between the air nozzle body 41 and the cast roll 30 or a stopper that prevents contact between the air nozzle body 41 and the T-die 20 may be provided.

### REFERENCE SIGNS LIST

- 1A: resin sheet manufacturing apparatus
- 2: resin sheet
- 3: protrusion
- 10: extruder
- 11: main motor
- 12: decelerator
- 13: cylinder
- 14: hopper
- 20: die (T-die)
- 21: resin channel
- 22: bottom surface
- 23: outlet
- 30: cast roll
- 40: air nozzle device
- 41: air nozzle body
- 42: support mechanism
- 43: control unit
- 44: camera
- 45: sensor
- 46: drive mechanism
- 50: winder
- 61: base
- 62: support (support leg)
- 62a, 62b: support leg
- 63: holder (holding arm)
- 63a, 63b: holding arm
- 64: base drive mechanism
- 65: holder drive mechanism
- Aσ: appearance rate
- T: distance
- G: installation surface
- L: imaginary horizontal line
- O: center
- P: reference point
- W: width
- Wr: reference width
- Wσ: coefficient of variation
- α: angle

## Claims

1. An air nozzle device configured to blow air to a resin sheet extruded from a die to press the resin sheet against a cast roll, the air nozzle device comprising:
an air nozzle body configured to eject compressed air to the resin sheet;
a support mechanism configured to support the air nozzle body so as to be movable and rotatable;
a first drive mechanism configured to move the air nozzle body;
a second drive mechanism configured to rotate the air nozzle body; and
a control unit configured to control the first drive mechanism and the second drive mechanism,
wherein the control unit can adjust a position of the air nozzle body in at least two different directions and can adjust an angle of the air nozzle body.

2. The air nozzle device according to claim 1,
wherein the control unit can adjust the position of the air nozzle body in an X-axis direction that is parallel to a horizontal plane and is orthogonal to an axial direction of the cast roll and a Z-axis direction that is orthogonal to the horizontal plane and is orthogonal to the axial direction of the cast roll.

3. The air nozzle device according to claim 2,
wherein the control unit can rotate the air nozzle body around a rotational axis extending in a Y-axis direction that is parallel to the horizontal plane and is parallel to the axial direction of the cast roll.

4. The air nozzle device according to claim 3,
wherein the control unit can adjust the position of the air nozzle body in the Y-axis direction in addition to the X-axis direction and the Z-axis direction.

5. The air nozzle device according to claim 1,
wherein the control unit adjusts at least either the position or angle of the air nozzle body such that a coefficient of variation of a width of the resin sheet falls below a specified value.

6. The air nozzle device according to claim 1,
wherein the control unit adjusts at least either the position or angle of the air nozzle body such that a width of the resin sheet exceeds a specified value.

7. The air nozzle device according to claim 5, further comprising a sensor configured to detect both ends of the resin sheet in a width direction,
wherein the control unit adjusts at least either the position or angle of the air nozzle body based on a detection result of the sensor.

8. The air nozzle device according to claim 6, further comprising a sensor configured to detect both ends of the resin sheet in a width direction,
wherein the control unit adjusts at least either the position or angle of the air nozzle body based on a detection result of the sensor.

9. The air nozzle device according to claim 1,
wherein the control unit includes a camera configured to capture a surface of the resin sheet, and
wherein the control unit adjusts at least either the position or angle of the air nozzle body based on a captured image of the camera.

10. The air nozzle device according to claim 3,
wherein the support mechanism includes a base, a support fixed to the base, and a holder supported by the support and configured to hold the air nozzle body,
wherein the holder is movable in the X-axis direction and the Z-axis direction with respect to the support, and
wherein the air nozzle body is rotatable with respect to the holder.

11. The air nozzle device according to claim 9,
wherein the base is movable in the X-axis direction and the Y-axis direction.

12. A resin sheet manufacturing apparatus comprising:
an extruder configured to heat and melt a resin raw material;
a die configured to form a molten resin pressed in by the extruder into a sheet shape;
a cast roll configured to cool and solidify a resin sheet extruded from the die; and
an air nozzle device configured to blow air to the resin sheet extruded from the die to press the resin sheet against the cast roll,
wherein the air nozzle device includes:
an air nozzle body configured to eject compressed air to the resin sheet;
a support mechanism configured to support the air nozzle body so as to be movable and rotatable;
a first drive mechanism configured to move the air nozzle body;
a second drive mechanism configured to rotate the air nozzle body; and
a control unit configured to control the first drive mechanism and the second drive mechanism, and
wherein the control unit can adjust a position of the air nozzle body in at least two different directions and can adjust an angle of the air nozzle body.
